# EUROPÄISCHE PATENTSCHRIFT

(11) **EP 3 405 433 B1**
(45) Veröffentlichungstag und Bekanntmachung des Hinweises auf die Patenterteilung: **22.09.2021**
(21) Anmeldenummer: 16744753.1
(22) Anmeldetag: 27.07.2016
(51) Int. Cl.: C01B 33/187, C01B 33/193, C09C 1/30

(54) **VERFAHREN ZUR HERSTELLUNG EINER MODIFIZIERTEN FÄLLUNGSKIESELSÄURE**
METHOD FOR PRODUCING MODIFIED PRECIPITATED SILICA
PROCÉDÉ DE PRODUCTION D'UN ACIDE SILICIQUE PRÉCIPITÉ MODIFIÉ

(43) Veröffentlichungstag der Anmeldung: 28.11.2018
(73) Patentinhaber: Wacker Chemie AG, 81737 München (DE)
(72) Erfinder: SCHNEIDER, Achim, 63263 Neu-Isenburg (DE)
(74) Vertreter: Fritz, Helmut
(86) Internationale Anmeldenummer: PCT/EP2016/067949
(87) Internationale Veröffentlichungsnummer: WO 2018/019373

(56) Entgegenhaltungen:
- EP-A1- 1 281 733
- EP-A1- 1 295 906
- EP-A1- 1 559 744
- EP-A1- 1 561 728
- EP-A2- 1 048 696
- EP-A2- 1 333 053
- DE-A1- 3 309 272
- GB-A- 2 001 303
- US-A- 2 657 149
- US-A- 4 273 589

## Beschreibung

Gegenstand der Erfindung ist ein Verfahren zur Herstellung einer modifizierten Fällungskieselsäure, wobei i) die Modifizierung in der Reaktionsmischung, die 1. Säure und 2. eine Verbindung ausgewählt aus einer Fällungskieselsäure und/oder [SiO_{4/2}]-Ausgangsstoffen und 3. ein Organosiliconat als Modifizierungsmittel umfasst, erfolgt, wobei die Modifizierungsreaktion während oder unmittelbar nach der Herstellreaktion der Fällungskieselsäure erfolgt, ii) die Reaktionsmischung anschließend gefiltert und gewaschen wird und iii) die Reaktionsmischung gegebenenfalls getrocknet wird und wobei als [SiO_{4/2}]-Ausgangsstoffe Alkoxysilane oder Alkalisilicate eingesetzt werden.

Bei Fällungskieselsäuren handelt es sich um Oxide des Siliciums (SiO₂), die großtechnisch über Fällungsprozesse hergestellt und in einem breiten Anwendungsfeld eingesetzt werden. Aufgrund ihrer strukturellen Beschaffenheit und der damit verbunden Verstärkungswirkung stellen sie einen elementaren Bestandteil sowohl von organischen Kautschuken, z.B. für den Einsatz in Reifen, als auch in Siliconkautschuken oder anderen polymeren Materialien dar. Nach der notwendigen Vernetzungstemperatur unterscheidet man zwischen Kalt- bzw. Raumtemperatur- (RTV) und Heiß- bzw. Hochtemperatur-vernetzenden (HTV) Siliconkautschuken.

Sie finden darüber hinaus aber auch Verwendung beispielsweise als Free-Flow-Additiv, verstärkender Füllstoff, Carrier, Filterhilfsmittel, zur Rheologiesteuerung oder aufgrund ihrer abrasiven Eigenschaften. Free-Flow-Additive oder Antiblockmittel (Antibackmittel, "anticaking agent") verhindern als Additive in pudrigen oder granulären Materialien Klumpenbildung und ermöglichen dadurch einfaches Verpacken, Transport und Gebrauch.

Je nach gewünschtem Effekt in der Zielanwendung müssen durch die Herstellung bestimmte Eigenschaftsprofile erreicht werden. So wird in zahlreichen Patentanmeldungen beschrieben, dass durch exakte Kontrolle bestimmter Prozessparameter wie z.B. Temperatur, pH-Wert, Dosiergeschwindigkeiten Kieselsäuren mit einer bestimmten Kombination an Produkteigenschaften hergestellt werden können, die sich wiederum vorteilhaft in den Zielanwendungen auswirken.

In bestimmten Fällen ist über die Kontrolle der strukturellen Eigenschaften hinaus auch eine Oberflächenmodifizierung der Kieselsäure nötig, beispielsweise um die Wechselwirkungen mit der umgebenden Matrix und/oder die Dispergiergüte zu verbessern oder um die Wasseraufnahme zu verringern. Zur Modifizierung kommen typischerweise Stoffe mit organischen, also Kohlenstoffhaltigen Gruppen zum Einsatz. Ein einfacher Weg das Vorliegen einer Modifizierung festzustellen und zu quantifizieren ist die Elementaranalyse auf den Kohlenstoffgehalt.

Schon früh wurde z.B. in DE1229504 auch die Möglichkeit beschrieben hydrophobe Kieselsäuren durch Zusatz von Organochlorsilanen zu Wasserglas zu erhalten. Diese Methode setzte sich aber im Folgenden nicht durch und fand sich in späteren Patentanmeldungen kaum wieder.

DE 33 09 272 beschreibt die Modifizierung einer Fällungskieselsäure durch ein Polydimethylsiloxan in der Reaktionslösung des Fällungsschritts. Nachteilig dabei ist, dass wegen der Wasserunlöslichkeit des Polydimethylsiloxans dieses in Form einer Emulsion eingesetzt werden muss. Dabei besteht die Gefahr, dass zumindest ein Teil des Emulgators auf der Kieselsäure adsorbiert wird und damit die Anwendungseigenschaften der Kieselsäure, wie z.B. deren Benetzungseigenschaften, nachteilig beeinflusst werden. Eine komplette Entfernung des Emulgators aus der Kieselsäure ist erfahrungsgemäß schwierig und erfordert exzessives Waschen mit Wasser, was kostenintensiv ist.

EP 1 048 696 beschreibt die Modifizierung einer Fällungskieselsäure in flüssiger Phase mit Organochlor- bzw. Organoalkoxysilanen oder Organosilazanen. Diese Modifizierungsreagenzien sind wasserunlöslich. Daher muss unter Einsatz eines wasserlöslichen organischen Lösungsmittels wie beispielsweise Isopropanol gearbeitet werden. Der Zusatz von organischen Lösungsmitteln ist nachteilig, da diese die Polarität des Reaktionsmediums ändern und somit zu einer Aggregation der Kieselsäure führen können, was zur Bildung von Grobpartikeln führen kann. Zudem ist die Rückgewinnung des organischen Lösungsmittels z.B. durch Destillation energie- und damit kostenintensiv. Ferner hat der Einsatz von Organochlor- bzw. Organoalkoxysilanen oder Organosilazanen den Nachteil, dass diese mit Wasser reagieren und dabei Spaltprodukte bilden, die entfernt werden müssen. Zudem ist die Reaktion von Chlorsilanen mit Wasser unter Freisetzung von Chlorwasserstoff heftig und schwer zu kontrollieren.

GB 2 001 303 beschreibt ebenfalls die Modifizierung in wässriger Phase mit Organosilanen. Hier gelten die oben beschriebenen Nachteile der Bildung von Spaltprodukten analog.

EP 1 559 744 beschreibt die Modifizierung einer gefällten Kieselsäure in wässriger Phase u.a. mittels eines Organosiliconates. Dabei wird die Kieselsäure aus der Reaktionslösung des Fällungsschrittes als Filterkuchen abgetrennt, der Filterkuchen in entsalztem Wasser redispergiert und anschließend modifiziert. Diese Reaktionsführung ist nachteilig, da die Abtrennung und Redispergierung der Kieselsäure vor der Modifizierung zeit-, energie- und damit kostenintensiv ist. Ferner kann die Kompaktierung der Kieselsäure während der Filtration zu einer irreversiblen Bildung von Grobpartikeln führen. Gleiches gilt für die Redispergierung der Kieselsäure in entsalztem Wasser, dabei sowohl der pH-Wert als auch der Elektrolygehalt des Dispergiermediums kurzzeitig drastisch geändert werden, was massiv die kolloidalen Eigenschaften der Kieselsäure beeinflusst und zu unerwünschter Aggregation führen kann.

Der technologische Ansatz des Zusatzes von Organochlorsilanen bei der Herstellung der Fällungskieselsäuren aus Wasserglas hat gegenüber der nachträglichen Modifizierung entscheidende Nachteile, da hier kaum Möglichkeiten bestehen die strukturellen Parameter der Fällungskieselsäure zu steuern.

Stattdessen werden in neueren Schriften nahezu ausschließlich mehrstufige Prozesse zur Herstellung von modifizierten Kieselsäuren beschrieben. So beschreibt die Patentanmeldung DE2513608 die nachträgliche Modifizierung einer Fällungskieselsäure mit Alkoxysilanen bei 300 °C. Der nachgelagerte Prozess zur Modifizierung ist teuer, da er aufwendige Anlagen zur Handhabung des Pulvers und einen weiteren thermischen Aufheizschritt beinhaltet.

Wenn möglich und technisch sinnvoll erfolgt die Modifizierung daher oftmals erst *in situ*-während des Einsatzes in der Zielanwendung. So beschreibt z.B. EP1295850 die Herstellung spezieller Kieselsäuren für Reifenkautschuk und die *in situ-*Modifizierung mit einem schwefelhaltigen Organosilan. Dies ist aber nicht immer möglich bzw. wünschenswert.

Für eine Vielzahl an Anwendungen ist eine hohe chemische Reinheit wichtig. So können schlechte Isolierungseigenschaften von Silikonmassen beispielsweise häufig auf ionische Verunreinigungen zurückgeführt werden, die mit dem Füllstoff eingebracht werden. Andere Verunreinigungen können das optische Erscheinungsbild von Silikonkautschuken in Form von Verfärbungen negativ beeinflussen. Und auch bei Anwendungen in elektrofotografischen Tonern können hohe Verunreinigungen das Aufladungsverhalten empfindlich stören.

In den oben ausgeführten Ausführungsformen zur Herstellung oberflächenmodifizierter Kieselsäuren ist es aber nicht möglich nicht flüchtige wasserlösliche Verunreinigungen wie beispielsweise Salze nachträglich zu entfernen, weil die Produkte stark hydrophob sind, d.h. von Wasser nicht benetzt werden. Aufgrund dessen weisen am Markt erhältliche organisch modifizierte Fällungskieselsäuren typischerweise hohe Verunreinigungen an Salzen auf, weshalb in empfindlichen Anwendungen meist hochreine aber deutlich teurere pyrogene Kieselsäuren zum Einsatz kommen.

Aufgabe der Erfindung ist es, ein wirtschaftliches und darüber hinaus ressourcenschonend arbeitendes Verfahren für die schnelle und einfache Herstellung von kostengünstigen, organisch modifizierten Kieselsäuren, sowie Zusammensetzungen mit hoher chemischer Reinheit enthaltend diese Kieselsäuren zur Verfügung zu stellen.

Diese Aufgabe wird gelöst durch die Bereitstellung eines Verfahrens zur Herstellung einer modifizierten Fällungskieselsäure, wobei i) die Modifizierung in der Reaktionsmischung, die 1. Säure und 2. eine Verbindung ausgewählt aus einer Fällungskieselsäure und/oder [SiO_{4/2}]-Ausgangsstoffen und 3. ein Organosiliconat als Modifizierungsmittel umfasst, erfolgt, wobei die Modifizierungsreaktion während oder unmittelbar nach der Herstellreaktion der Fällungskieselsäure erfolgt, ii) die Reaktionsmischung anschließend gefiltert und gewaschen wird und iii) die Reaktionsmischung gegebenenfalls getrocknet wird und wobei als [SiO_{4/2}]-Ausgangsstoffe Alkoxysilane oder Alkalisilicate eingesetzt werden.

Als Kieselsäuren werden die Sauerstoffsäuren des Siliciums mit der allgemeinen Summenformel H₂ₙ₊₂SiₙO₃ₙ₊₁ bezeichnet. Als Summenformel wird häufig SiO₂ · x H₂O angegeben, wobei x ein beliebiger Wert zwischen 0 und 2 sein kann; das Wasser ist bei Kieselsäuren jedoch kein Kristallwasser, sondern kann nur durch eine chemische Reaktion abgespalten werden und bildet sich aus gebundenen Hydroxygruppen. Die großtechnische Herstellung von synthetischem SiO₂ erfolgt hauptsächlich über Fällungsprozesse. So erzeugtes SiO₂ nennt man Fällungskieselsäuren.

Ein großer Vorteil beim Zur-Verfügung-Stellen von Fällungskieselsäuren besteht darin, dass diese im Gegensatz zu den deutlich teureren pyrogenen Kieselsäuren ein kostengünstiges Produkt darstellen.

Durch die Modifizierung wird ein besseres Eigenschaftsprofil erreicht, weshalb die Modifizierung der Kieselsäuren in vielen Anwendungen, die beispielsweise geringere Wasseraufnahme oder höhere Reißfestigkeit verlangen, eine Voraussetzung darstellt. Fällungskieselsäuren werden nach dem Fachmann bekannten Verfahren, wie beispielsweise in US 2,657,149, US 2,940,830 und US 4,681,750 beschrieben, aus kondensationsfähigen tetra- oder höherfunktionellen Silanen, Alkoxysilanen, Alkyl- oder Alkalisilicaten (Wassergläser) oder kolloidalen Silica-Partikeln bzw. - Lösungen hergestellt. Die erfindungsgemäße Reaktionsmischung umfasst 1. Säure und 2. die Fällungskieselsäure und/oder [SiO_{4/2}]-Ausgangsstoffe und 3. ein Organosiliconat als Modifizierungsmittel, wobei als [SiO_{4/2}]-Ausgangsstoffe Alkoxysilane oder Alkalisilicate eingesetzt werden. In einer bevorzugten Ausführungsform werden Alkoxysilane als [SiO_{4/2}]-Ausgangsstoffe eingesetzt. In einer alternativ bevorzugten Ausführungsform werden Alkalisilicate als [SiO_{4/2}]-Ausgangsstoffe eingesetzt.

[SiO_{4/2}]-Einheiten bezeichnen Verbindungen, in denen ein Siliciumatom an vier Sauerstoffatome gebunden ist, die wiederum jeweils ein freies Elektron für eine weitere Bindung aufweisen. Es können über das Sauerstoffatom verbundene Einheiten mit Si-O-Si-Bindungen vorliegen. Die freien Sauerstoffatome sind im einfachsten Fall an Wasserstoff oder Kohlenstoff gebunden bzw. die Verbindungen liegen als Salze, bevorzugt Alkalisalze, vor. Als Ausgangsstoff (Vorstufe) zur Bildung von [SiO_{4/2}]-Einheiten ([SiO_{4/2}]-Ausgangsstoff) werden erfindungsgemäß Alkoxysilane oder Alkalisilicate (Wassergläser) verwendet. Im Rahmen dieser Erfindung bezeichnen die [SiO_{4/2}]-Einheiten die Fällungskieselsäure; Alkoxysilane oder Alkalisilicate dienen als [SiO_{4/2}]-Ausgangsstoffe ihrer Herstellung.

In beiden Fällen, d.h. egal ob Alkoxysilane oder Alkalisilicate als [SiO_{4/2}]-Ausgangsstoffe dienen, werden in einem ersten Reaktionsschritt zunächst niedermolekulare und lösliche Kieselsäuren gebildet. Der Einfachheit halber werden in den folgenden Reaktionsgleichungen nur monomere Strukturen beschrieben, wenngleich auch lösliche oligomere Strukturen beteiligt sein können.

Werden Alkoxysilane als Ausgangsstoff zur Herstellung von Fällungskieselsäuren eingesetzt, so kann die Hydrolyse in Wasser durch Säuren oder Basen katalysiert werden:

Si(OR)₄ + 4 H₂O → Si(OH)₄ + 4 ROH

Bevorzugt wird die Hydrolyse in wässrigen Lösungen mineralischer oder organischer Säuren, insbesondere bevorzugt in wässriger Schwefelsäurelösung, Salzsäurelösung oder Kohlensäure durchgeführt.

Als Alkoxysilane werden bevorzugt Tetramethoxysilan und insbesondere bevorzugt Tetraethylorthosilicat (TEOS) eingesetzt.

Besonders bevorzugt werden als [SiO_{4/2}]-Ausgangsstoffe Wassergläser eingesetzt. Als Wasserglas werden aus einer Schmelze erstarrte, glasartige, also amorphe, wasserlösliche Natrium-, Kalium- und Lithiumsilicate oder ihre wässrigen Lösungen bezeichnet.

Durch Umsetzung mit Säure, insbesondere bevorzugt in wässriger Schwefelsäurelösung, Salzsäurelösung oder Kohlensäure, werden auch hier niedermolekulare lösliche Kieselsäuren gebildet:

M₂O · zSiO₂ + HX → zSi(OH)₄ + 2 MX

wobei z eine beliebige positive Zahl ist.

Besonders die in wässriger Lösung vorliegenden Strukturen sind in Wirklichkeit deutlich komplizierter, als hier dargestellt. Es wurde hier dennoch die geläufige Schreibweise für Wassergläser verwendet. Die genaue Stöchimetrie und die Zusammensetzung des gebildeten Salzes (MX) hängt natürlich von der Qualität des eingesetzten Wasserglases ab und kann hier nur schematisch wiedergegeben werden.

Es können auch Gemische oder Hydrolyseprodukte der genannten Ausgangsstoffe, insbesondere deren Hydrolyseprodukte mit Wasser und/oder Alkoholen, eingesetzt werden.

Die auf diese Weise gebildete Orthokieselsäure Si(OH)₄ bzw. oligomere Verbindungen reagieren unter geeigneten Reaktionsbedingungen unter Kondensation und bilden partikuläre Feststoffe die im Wesentlichen aus SiO_{4/2}-Einheiten aufgebaut sind:

zSi (OH)₄ → SiO_{4z/2} + 2n H₂O

wobei z eine beliebige positive Zahl ist.

Die Kondensation wird im sauren oder besonders im alkalischen Milieu begünstigt.

Als Säure können Mineralsäuren, organische Säuren und/oder Kohlendioxid eingesetzt werden.

Der Reaktionsmischung können weitere Stoffe wie beispielsweise Elektrolyte und/oder Alkohole zugesetzt werden. Beim Elektrolyten kann es sich um ein lösliches anorganisches oder organisches Salz handeln. Zu den bevorzugten Alkoholen zählen u.a. Methanol, Ethanol oder i-Propanol. In einer bevorzugten Ausführungsform werden der Reaktionsmischung als weitere Stoffe zusätzlich zu Wasser, Alkalisilicat, Säure und Organosiliconat nur Elektrolyte und/oder Alkohole zugesetzt, besonders bevorzugt nur Elektrolyte und insbesondere bevorzugt werden der Reaktionsmischung keine weiteren Stoffe zugesetzt.

Bevorzugt enthält die Reaktionsmischung Wasser, Alkalisilicat, Säure und Organosiliconat, besonders bevorzugt Wasser, Alkalisilicat, Säure und Methylsiliconat, insbesondere bevorzugt Wasser, Natriumsilikat (Natriumwasserglas), Schwefelsäure und Natrium-Monomethylsiliconat. Diese Zusammensetzung hat den Vorteil, dass neben dem Produkt lediglich das Salz Natriumsulfat als Nebenprodukt anfällt. Dieses gut wasserlösliche Salz lässt sich relativ einfach vom Produkt trennen, wobei Trennmethoden wie Filtration, Sedimentation und/oder Zentrifugation zum Einsatz kommen können.

Bevorzugt beträgt die Temperatur der Reaktionsmischung zwischen 50 °C und 105 °C, besonders bevorzugt zwischen 75 °C und 95 °C und insbesondere bevorzugt zwischen 85 °C und 95 °C. In einer besonders bevorzugten Ausführungsform wird die Reaktionstemperatur im weiteren Verfahren konstant gehalten.

Bevorzugt beträgt der pH-Wert der Reaktionsmischung zwischen pH=8 bis pH=10, besonders bevorzugt zwischen pH=8,5 bis pH=9,5 und insbesondere bevorzugt pH=9. In einer besonders bevorzugten Ausführungsform wird der pH-Wert während des weiteren Verfahrens konstant gehalten. Zu diesem Zweck wird der Reaktionsmischung bevorzugt weitere Säure, besonders bevorzugt Schwefelsäure oder Salzsäure und insbesondere bevorzugt konzentrierte Schwefelsäure zugesetzt, um der Alkalinität des ggf. zugesetzten Wasserglases entgegenzuwirken.

Die Dosierung der Edukte wie Säure, [SiO_{4/2}]-Ausgangsstoffe, Modifizierungsmittel und eventueller weiterer Stoffe erfolgt bevorzugt mit konstanter Dosiergeschwindigkeit. Konstante Dosiergeschwindigkeit bedeutet, dass sich diese im Verlauf der Dosierzeit bevorzugt um maximal 15%, besonders bevorzugt um maximal 5% und insbesondere bevorzugt um maximal 1% bezogen auf die Durchschnittsgeschwindigkeit, die sich als Quotient der gesamten Dosiermenge und -zeit berechnet, ändert.

Die Dosierung erfolgt bevorzugt über einen Zeitraum von 30 min bis 120 min, besonders bevorzugt über einen Zeitraum von 45 min bis 90 min und insbesondere bevorzugt über einen Zeitraum von 60 min bis 70 min.

Die dosierte Gesamtmenge der [SiO_{4/2}]-Ausgangsstoffe wird vorzugsweise so gewählt, dass der Feststoffanteil gerechnet als Masse [SiO_{4/2}]-Einheiten 20 Gew.-%, besonders bevorzugt 10 Gew.-% der Gesamtmasse der Edukte nicht überschreitet. Insbesondere bevorzugt liegt der Festgehalt gerechnet als Masse [SiO_{4/2}]-Einheiten zwischen 4 Gew.-% und 8 Gew.-% bezogen auf die Gesamtmasse der Reaktionsmischung. Die Masse der Edukte wird gravimetrisch bestimmt.

Die genaue Mikrostruktur der gebildeten Kieselsäuren hängt stark von den genauen Reaktionsbedingungen ab. Am stärksten offenbart sich dies anhand der Veränderung der BET-Oberfläche, die im Wesentlichen umgekehrt proportional zur Größe der Partikel der hergestellten Fällungskieselsäure ist.

Im Allgemeinen werden die Reaktionskomponenten durch einfaches Rühren vermischt. Gut dispergierbare Kieselsäurefüllstoffe mit besonders gleichmäßiger Teilchengröße, spezifischer Oberfläche und "Struktur" lassen sich auch durch Umsetzen von Alkalisilicatlösungen mit Säuren und/oder säureartig wirkenden Stoffen, gegebenenfalls in Gegenwart von Neutralsalzen, dadurch herstellen, dass die Fällung der Kieselsäure durch rasches und intensives Vermischen der Reaktionskomponenten unter Einwirkung hoher Scherkräfte, die von einem steilen Geschwindigkeitsgefälle herrühren, vorgenommen wird. Das hohe Geschwindigkeitsgefälle wird bevorzugt mittels kontinuierlich arbeitender Dispergatoren, wie beispielsweise einer Kolloidmühle erzeugt.

Im 1. Verfahrensschritt (i) zur Herstellung einer modifizierten Fällungskieselsäure erfolgt die Reaktion zur Herstellung einer Fällungskieselsäure und deren Modifizierung im gleichen Ansatz, wobei die Modifizierungsreaktion während oder unmittelbar nach der Herstellreaktion der Fällungskieselsäure erfolgt. Das bedeutet, dass die Modifizierung in der oben beschriebenen Reaktionsmischung, die der Herstellung der Fällungskieselsäure dient, erfolgt. Dieses Verfahren wird im Rahmen dieser Erfindung auch als Eintopf-Verfahren bezeichnet. Das Eintopf-Verfahren ist ein deutlicher Unterschied zum Stand der Technik, der im Allgemeinen mit mehrstufigen, separaten Prozessen arbeitet.

Erfindungsgemäß erfolgt die Modifizierungsreaktion während oder unmittelbar nach der Herstellreaktion der Fällungskieselsäure. Erfindungsgemäß bedeutet "unmittelbar" in diesem Zusammenhang, dass die Modifizierung in der Reaktionsmischung, die 1. Säure und 2. die Fällungskieselsäure und/oder [SiO_{4/2}]-Ausgangsstoffe und 3. ein Organosiliconat als Modifizierungsmittel umfasst, erfolgt, ohne dass vor der Modifizierungsreaktion ein Verfahrensschritt zum Abtrennen von Salzen und/oder anderen Nebenprodukten durchgeführt wird. Der Begriff "unmittelbar" ist nicht auf *zeitlich* unmittelbar bezogen, ein Rühren oder ein Stehenlassen zwischen den Reaktionsschritten ist nicht ausgeschlossen. Erfindungsgemäß wird vor der Modifizierungsreaktion aber kein Ionenaustausch-, Filtrations-, Wasch-, Destillations- oder Zentrifugationsschritt und kein Resuspendieren durchgeführt. Der Verzicht auf einen vorherigen Verfahrensschritt zum Abtrennen von Salzen und/oder anderen Nebenprodukten hat den großen Vorteil, dass Energiekosten, Zeit und Ressourcen wie beispielsweise Waschlösung bzw. Waschwasser und Lösung bzw. Wasser zum Resuspendieren eingespart werden. Dieses Vorgehen macht die Nutzung weiterer Aggregate überflüssig. Wirtschaftlich ist es von besonderem Interesse, da das erfindungsgemäße Verfahren Zeit spart und somit die Anlagenbelegzeit senkt. Die anderen Nebenprodukte umfassen unter anderem Alkohole.

Bei der Modifizierung oder Modifizierungsreaktion, die im Rahmen dieser Erfindung auch synonym mit Hydrophobierung oder Hydrophobierungsreaktion bezeichnet wird, reagiert die nicht modifizierte Fällungskieselsäure mit einem Modifizierungsmittel. Entsprechend wird auch das Modifizierungsmittel im Rahmen dieser Erfindung synonym mit Modifizierungsagens, Belegmittel, Belegungsmittel, Hydrophobiermittel oder Silylierungsmittel bezeichnet.

Der Grad der Modifizierung lässt sich durch den Kohlenstoffgehalt nach DIN ISO 10694 bestimmen. Dieser beträgt bevorzugt 0,1 Gew.-% bis 15 Gew.-%. Je nach gewünschter Verwendung der modifizierten Fällungskieselsäure können bestimmte Modifizierungsgrade besonders bevorzugt sein. So beträgt der Kohlenstoffgehalt beispielsweise bei Verwendungen in Silikonkautschuken besonders bevorzugt 0,5 Gew.-% bis 4 Gew.-% und insbesondere bevorzugt 1 Gew.-% bis 2 Gew.-%. Bei Verwendungen als Antiblockmittel beträgt er besonders bevorzugt 4 Gew.-% bis 10 Gew.-% und insbesondere bevorzugt 5 Gew.-% bis 7 Gew.-%.

Bevorzugt beträgt die Temperatur der Reaktionsmischung bei der Modifizierung weiterhin zwischen 50 °C und 105 °C, besonders bevorzugt zwischen 75 °C und 95 °C und insbesondere bevorzugt zwischen 85 °C und 95 °C. Besonders bevorzugt wird die Reaktionstemperatur während des Verfahrensschritts i konstant gehalten, d.h. sie schwankt um maximal ±5 °C, besonders bevorzugt um maximal ±2 °C.

Bevorzugt beträgt der pH-Wert der Reaktionsmischung weiterhin zwischen pH=8 bis pH=10, besonders bevorzugt zwischen pH=8,5 bis pH=9,5 und insbesondere bevorzugt pH=9. Besonders bevorzugt wird der pH-Wert während des Verfahrensschritts i konstant gehalten, d.h. er schwankt um maximal 0,5 Einheiten, besonders bevorzugt um maximal 0,2 Einheiten. Zu diesem Zweck wird der Reaktionsmischung bevorzugt weitere Säure, besonders bevorzugt Schwefelsäure oder Salzsäure und insbesondere bevorzugt konzentrierte Schwefelsäure zugesetzt, um der Alkalinität des ggf. zugesetzten Siliconats entgegenzuwirken.

Bevorzugt findet dieser Verfahrensschritt unter Rühren statt.

Bevorzugt findet dieser Verfahrensschritt unter Einwirkung hoher Scherkräfte, die von einem steilen Geschwindigkeitsgefälle herrühren, statt. Das hohe Geschwindigkeitsgefälle wird bevorzugt mittels kontinuierlich arbeitender Dispergatoren wie beispielsweise einer Kolloidmühle erzeugt.

Dieses hat zum Vorteil, dass feinteilige Kieselsäure mit guten Dispergiereigenschaften erhalten wird.

Bevorzugt wird das Modifizierungsmittel bei Ansetzen der Reaktionsmischung parallel mit den [SiO_{4/2}]-Ausgangsstoffen und der Säure zur Reaktionsmischung gegeben. In diesem Fall ist es besonders bevorzugt, dass der Endpunkt der Dosierung des Modifizierungsmittels gemeinsam mit dem Endpunkt der Dosierung der [SiO_{4/2}]-Ausgangsstoffe erfolgt. In einer anderen bevorzugten Ausführungsform geht der Endpunkt der Dosierung des Modifizierungsmittels über den Endpunkt der Dosierung der [SiO_{4/2}]-Ausgangsstoffe hinaus.

Im Fall der parallelen Dosierung von Modifizierungsmittel und den [SiO_{4/2}]-Ausgangsstoffen ist es, unabhängig davon, ob die Dosierung des Modifizierungsmittels gleichzeitig mit der Dosierung der [SiO_{4/2}]-Ausgangsstoffe endet oder darüber hinaus geht, möglich, auf eine weitere separate, zusätzliche, spätere Zugabe des gleichen oder eines weiteren Modifizierungsmittels zur Reaktionsmischung ganz oder teilweise zu verzichten. Es ist besonders bevorzugt, auf eine weitere separate Zugabe des gleichen oder eines weiteren Modifizierungsmittels zur Reaktionsmischung komplett zu verzichten. Wenn das Modifizierungsmittel direkt bei Ansetzen der Reaktionsmischung mit den [SiO_{4/2}]-Ausgangsstoffen und der Säure zur Reaktionsmischung dosiert wird, ist das erfindungsgemäße Verfahren besonders kostengünstig, schnell und einfach.

In einer besonders bevorzugten Ausführungsform wird während der Überlappungsdauer, d.h. der gemeinsamen Dosierung von [SiO_{4/2}]-Ausgangsstoffen und Modifizierungsmittel, die Dosierung der [SiO_{4/2}]-Ausgangsstoffe graduell reduziert, wohingegen die des Modifizierungsmittels graduell erhöht wird. Dieses Vorgehen hat den Vorteil, dass durch die kontrollierte Zugabe des Modifizierungsmittels die Modifizierungsreaktion kontrolliert werden kann. Einem theoretischen Denkmodell zum Partikelaufbau folgend ist der Modifizierungsgrad im Kern der Partikel geringer und steigt dann an. Der Einsatz des im Vergleich zu den [SiO_{4/2}]-Ausgangsstoffen kostenintensiveren Modifizierungsmittels ist in diesem Fall besonders effizient.

In einer anderen bevorzugten Ausführungsform wird das Modifizierungsmittel zeitlich versetzt zur Reaktionsmischung gegeben. Das bedeutet, dass Säure und [SiO_{4/2}]-Ausgangsstoffe bei definierter Temperatur und definiertem pH-Wert gezielt dosiert werden (bevorzugte Bedingungen s.o.) und das Modifizierungsmittel erst anschließend sequentiell, also zeitlich versetzt, zudosiert wird. Das bedeutet, dass erst nach vollständig abgeschlossener Dosierung der Säure und [SiO_{4/2}]-Ausgangsstoffe das Modifizierungsmittel zur Reaktionsmischung gegeben wird. Die Reaktion zur Herstellung der Fällungskieselsäure und ihre Modifizierung finden zwar im gleichen Ansatz statt (Eintopf-Verfahren), aber es handelt sich um einen Zwei-Stufen-Prozess.

In diesem Fall der zeitlich versetzten Zugabe des Modifizierungsmittels erfolgt die Dosierung bevorzugt über einen Zeitraum von 5-120 min, bevorzugt 5-90 min und insbesondere bevorzugt 10-30 min.

In diesem Fall der zeitlich versetzten Zugabe des Modifizierungsmittels kann das Modifizierungsmittel der Reaktionsmischung in einem Schritt oder in mehreren kleinen Teilmengen zugesetzt werden, wobei es jeweils mit konstanter Dosierrate oder mit einer Dosierrate, die graduell erhöht wird, zugegeben werden kann.

Der Begriff "zeitlich versetzt" bezieht sich auf die Reaktion. Die Modifizierungsreaktion startet zeitlich versetzt. Bei kontinuierlicher Reaktionsführung spricht man in Bezug auf die Anlagengestaltung von räumlich versetzt (s.u.). D.h. um eine zeitlich versetzte Zugabe zu erreichen, muss die Einspeisung räumlich versetzt erfolgen.

Dieses Vorgehen hat den Vorteil, dass die Zugabe des Modifizierungsmittels und damit die Modifizierungsreaktion kontrolliert erfolgt.

Wie bereits bei der parallelen Dosierung beschrieben, ist es denkbar, dass durch dieses Vorgehen der Kern der hergestellten Partikel aus dem günstigeren Alkalisilikat gebildet werden kann, während der äußere Teil der Partikel (Schale) evtl. zunehmend modifiziert wird, d.h. eine chemisch gebundene, durch das Modifizierungsmittel übertragene Gruppe aufweist. Dadurch können Primärpartikel hergestellt werden, die in Form eines Kern-Schale-Modells aufgebaut sind. Wirtschaftlich gesehen liegt der Vorteil dieses Verfahrens dann darin, dass überwiegend die die spätere Verwendung wesentlich beeinflussende Partikeloberfläche mit dem kostenintensiveren Modifizierungsmittel reagiert.

Zusätzlich zur beschriebenen parallelen oder zeitlich versetzten Dosierung von Modifizierungsmittel und [SiO_{4/2}]-Ausgangsstoffen sind alle Mischformen denkbar, d.h. dass beispielsweise eine Teilmenge des Modifizierungsmittels parallel und z.B. mit graduell ansteigender Dosierrate dosiert wird und eine Teilmenge zeitlich versetzt und z.B. mit konstanter Dosierrate. Die Dosierung von Modifizierungsmittel und [SiO_{4/3}]-Ausgangsstoffen kann zur Herstellung der modifizierten Fällungskieselsäure somit beliebig gewählt und dadurch die Partikeleigenschaften kontrolliert werden.

Entsprechend des theoretischen Denkmodells zum Partikelaufbau (s.o.) können nicht nur nach dem Kern-Schale-Modell aufgebaute Partikel mit von innen nach außen sprunghaft bzw. abrupt ansteigendem Modifizierungsgrad, sondern auch durch eine kontinuierliche Zugabe des Modifizierungsmittels nach dem Gradienten-Modell aufgebaute Partikel mit von innen nach außen graduell, bzw. allmählich ansteigendem Modifizierungsgrad hergestellt werden.

Die Modifizierungsmittel können der Reaktionsmischung in flüssiger Form oder als trockenes Pulver zugefügt werden.

Die Modifizierungsagenzien können dabei in reiner Form oder als Lösungen in Wasser oder bekannten technisch eingesetzten Lösungsmitteln beispielsweise Alkoholen wie z.B. Methanol, Ethanol, oder i-Propanol, Ethern wie z.B. Diethylether, Tetrahydrofuran, oder Dioxan, oder Kohlenwasserstoffen wie z.B. Hexanen oder Toluol zugemischt werden.

Unter einem Modifizierungsmittel werden in der vorliegenden Anmeldung Organosiliconate, sowie deren Lösungen verstanden.

Erfindungsgemäß bezeichnen Organosiliconate Verbindungen der allgemeinen Formel (I)

R¹ₙ - Si(OR²)₄₋ₙ

wobei R¹, R² und n die folgenden Bedeutungen haben:
- R¹=: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂-A-ryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heteroaryl,
- R²=: unabhängig voneinander Wasserstoff, lineares oder verzweigtes, gegebenenfalls funktionalisiertes C₁-C₃₀-Alkyl, lineares oder verzweigtes, gegebenenfalls funktionalisiertes C₂-C₃₀-Alkenyl, lineares oder verzweigtes, gegebenenfalls funktionalisiertes C₂-C₃₀-Alkinyl, gegebenenfalls funktionalisiertes C₃-C₂₀-Cycloalkyl, gegebenenfalls funktionalisiertes C₃-C₂₀-Cycloalkenyl, gegebenenfalls funktionalisiertes C₁-C₂₀-Heteroalkyl, gegebenenfalls funktionalisiertes C₅-C₂₂- Aryl, gegebenenfalls funktionalisiertes C₆-C₂₃-Alkylaryl, gegebenenfalls funktionalisiertes C₆-C₂₃-Arylalkyl, gegebenenfalls funktionalisiertes C₅-C₂₂-Heteroaryl,
NR¹₄+, wobei R¹ unabhängig voneinander die oben genannten Bedeutungen haben kann,
Gruppe der allgemeinen Formel 1/ (p-n*y) M^{P+}Xⁿ⁻_{y}, wobei M Metallatom ausgewählt aus der Gruppe bestehend aus Metallen der Haupt- und Nebengruppen des Periodensystems der Elemente, X ein Anion, p Oxidationszahl des Metallatoms M, n eine ganze Zahl aus 1, 2 oder 3 und y eine ganze Zahl aus 0, 1 oder 2 bedeuten,
und/oder
Gruppe der allgemeinen Formel (IIa)

-SiRⁱₘ(OR²)₃₋ₘ

wobei R¹ und R² unabhängig voneinander die oben genannten Bedeutungen haben und m unabhängig voneinander 0, 1 , 2 oder 3 bedeuten kann,
- n=: 1, 2 oder 3,
und wenigstens ein Lösungsmittel, wenigstens eine oberflächenaktive Substanz oder eine Mischung davon,
wobei in der Verbindung der allgemeinen Formel (I) oder in der Gruppe der allgemeinen Formel (IIa) mindestens ein Rest R²NR¹₄⁺ oder eine Gruppe der allgemeinen Formel 1/(p-n*y) M^{P+}Xⁿ⁻_{y} mit den oben genannten Bedeutungen für R¹, p, n, y, M und X ist.

Hat R² in der Verbindung der allgemeinen Formel (I) mehrmals, beispielsweise mehr als einmal, die Bedeutung einer Gruppe der allgemeinen Formel (IIa), so liegen entsprechende Verbindungen vor, die zwei, drei, vier oder mehr Einheiten mit Si-Atomen tragen. Daher liegen für den Fall, dass R² mehrmals eine Gruppe der allgemeinen Formel (IIa) bedeutet, Polysiloxane vor.

Es gilt, dass ein Organosiliconat mindestens eine Si-C-Bindung aufweist, d.h. mindestens ein Rest muss organischer Natur sein.

Der besondere Vorteil beim Einsatz von Organosiliconaten als Modifizierungsmittel besteht darin, dass diese hochgradig wasserlöslich und daher für eine homogene Reaktion im wässrigen Medium besonders geeignet sind. Der Einsatz einer wässrigen Lösung der ansonsten festen Stoffe vereinfacht die Handhabung, da mittels Pumpen vergleichsweise einfach eine exakte Dosierung erreicht werden kann.

Typischerweise eingesetzte Modifizierungsmittel sind dagegen schlecht bis gar nicht wasserlöslich. Sie reagieren teilweise spontan und unter starker Wärmeentwicklung heftig mit Wasser, wodurch eine sichere, gleichmäßige und kontrollierte Reaktionsführung deutlich erschwert ist (das trifft beispielsweise auf die oft eingesetzten Chlorsilane zu).

Erfindungsgemäß können auch Gemische verschiedener Organosiliconate eingesetzt werden. Gemische werden bevorzugt eingesetzt, wenn funktionelle Gruppen (z.B. Vinyl, Allyl, oder Schwefelhaltige Gruppen wie z.B. C₃H₆SH) eingeführt werden sollen.

Bevorzugt wird in das erfindungsgemäße Verfahren als Organosiliconat ein Methylsiliconat, insbesondere bevorzugt ein Monomethylsiliconat eingesetzt.

Der Einsatz von Monomethylsiliconaten ist über das oben Gesagte hinaus besonders vorteilhaft, weil Monomethylsiliconate einfach und in guter Ausbeute aus den leicht verfügbaren und kostengünstigen Stoffen Methyltrichlorsilan, Methyltrimethoxysilan oder Methylsilantriol durch Umsetzung mit alkalisch reagierenden Stoffen ggf. im wässrigen Medium erhalten werden können.

Besonders bevorzugt werden wässrige Lösungen von Monomethylsiliconaten der allgemeinen Form (CH₃)Si(OH)₃₋ₓOMₓ und deren oligomere Kondensationsprodukte eingesetzt, wobei das Gegenion M vorzugsweise Kalium oder Natrium ist und vorzugsweise gilt x = 0,5-1,5, besonders bevorzugt 0,8-1,3. In einer besonders bevorzugten Ausführungsform beträgt x= 0,8-0,9. x bezieht sich dabei nicht auf 1 Molekül, sondern auf die Gesamtheit der in der Mischung vorliegenden Moleküle.

Die eingesetzte Organosiliconat-Lösung besitzt vorzugsweise eine Dichte von 1,2-1,4 g/cm³. Die Dichte kann beispielsweise nach DIN 12791 bestimmt werden.

Die Verunreinigungen der Organosiliconat-Lösung an herstellungsbedingt enthaltenen Alkoholen (z.B. Ethanol oder Methanol) betragen vorzugsweise < 1 Gew.-%, besonders bevorzugt <100 ppm. Die alkoholischen Verunreinigungen können durch quantitative Gaschromatographie (beispielsweise mit dem 6890 Gaschromatographen der Firma Agilent ausgestattet mit einem FID-Detektor und OV-1-Trennsäule) bestimmt werden.

Der Festgehalt der wässrigen Organosiliconat-Lösungen beträgt vorzugsweise 20 Gew.-% bis 70 Gew.-%, besonders bevorzugt 30 Gew.-% bis 60 Gew.-%.

Der Festgehalt kann mit einem IR-Feuchtebestimmer (beispielsweise mit dem IR-Feuchtebestimmer MA 30 der Firma Sartorius bei einer Messtemperatur von 105 °C) bestimmt werden.

Der Wirkstoffgehalt gerechnet als (CH₃)SiO_{3/2} in der Reaktionsmischung beträgt vorzugsweise 15 Gew.-% bis 40 Gew.-%, besonders bevorzugt 30 Gew.-% bis 35 Gew.-%.

Der Gehalt an Alkalimetall der Organosiliconat-Lösung beträgt vorzugsweise 5 Gew.-% bis 20 Gew.-%, besonders bevorzugt 9 Gew.-% bis 18 Gew.-%. Der Alkaligehalt kann beispielsweise durch Titration mit 0,1 molarer Salzsäure gegen den Indikator Phenolphthalein bestimmt werden. Die Anzahl der dabei basisch reagierenden Gruppen entspricht bei Organosiliconat-Lösungen der Anzahl an Alkalimetallionen.

Die Kieselsäuren können mit ausschließlich einem Organosiliconat modifiziert sein, es kann aber auch eine Mischung von zwei oder mehreren Verbindungen aus der Gruppe der Organosiliconate eingesetzt werden.

Die dosierte Gesamtmenge des Modifizierungsmittels wird vorzugsweise so gewählt, dass der Feststoffanteil gerechnet als [SiO_{4/2}]_{g}[(CH₃)SiO_{3/2}]ⱼ (mit g und j unabhängig voneinander als beliebiger positiver Zahl), d.h. der Feststoffanteil der modifizierten [SiO_{4/2}]-Einheiten in der hergestellten modifizierten Fällungskieselsäure, 25 Gew.-%, besonders bevorzugt 15 Gew.-% der Gesamtmasse der Reaktionsmischung nicht überschreitet. Insbesondere bevorzugt liegt der Festgehalt gerechnet als [SiO_{4/2}]ₘ[(CH₃)SiO_{3/2}]ₙ zwischen 5 Gew.-% und 10 Gew.-% bezogen auf die Gesamtmasse der Reaktionsmischung.

Es ist bevorzugt, dass die Konzentration an modifizierten Gruppen in den Primärpartikeln von innen nach außen zunimmt.

Nach abgeschlossener Inkubationszeit, d.h. nach Verfahrensschritt i und vor Verfahrensschritt ii, ist es bevorzugt, dass der pH-Wert bevorzugt auf einen Wert kleiner als pH=5, besonders bevorzugt auf einen Wert kleiner als pH=4 und insbesondere bevorzugt auf pH=3,5 gesenkt wird.

Zudem wird die Reaktionsmischung nach abgeschlossener Inkubationszeit, d.h. nach Verfahrensschritt i und vor Verfahrensschritt ii, bevorzugt auf eine Temperatur von weniger als 55 °C und besonders bevorzugt auf Raumtemperatur abgekühlt, wobei während des Abkühlens bevorzugt weiter gerührt wird.

Im 2. Verfahrensschritt (ii) wird die Reaktionsmischung gefiltert und gewaschen. Dieser Verfahrensschritt dient u.a. dem Abtrennen von Salzen, die in der späteren Anwendung der modifizierten Fällungskieselsäure stören würden.

Zum Waschen können Wasser, polare organische Lösungsmittel oder Gemische davon eingesetzt werden, bevorzugt erfolgt das Waschen mit Wasser, besonders bevorzugt mit vollentsalztem, deionisierten (VE) Wasser, welches dadurch charakterisiert ist, dass es eine Leitfähigkeit von <5 µS/cm, bevorzugt von <3 µS/cm und besonders bevorzugt von ≤ 0,1 µS/cm aufweist.

Das Waschen kann auf verschiedene Arten erfolgen. Beispielsweise wird der durch Filtration abgetrennte Feststoff solange mit frischem Wasser durchspült, bis ein ausreichend niedriger (vorzugsweise konstanter) Leitfähigkeitswert des Waschwassers von <500 µS/cm, vorzugsweise <100 µS/cm, besonders bevorzugt <10 µS/cm erreicht wird. Die Durchströmung kann kontinuierlich oder portionsweise erfolgen. Eine besonders effiziente Form des Waschens stellt die Redispergierung des Filterkuchens in sauberem Wasser gefolgt von einer weiteren Filtration dar.

Die Leitfähigkeit von Wasser kann mit einem kommerziell erhältlichen Leitfähigkeitsmessgerät gemessen werden. Ein Beispiel für ein Leitfähigkeitsmessgerät, das verwendet werden kann, ist in den Analysemethoden genannt.

Es ist gegebenenfalls eine Nachbehandlung mit Reagenzien, die im Stand der Technik bekannt sind und üblicherweise zur Modifizierung eingesetzt werden, möglich.

Gegebenenfalls wird die Reaktionsmischung in einem weiteren Verfahrensschritt (iii) getrocknet. Die Trocknungstemperatur beträgt bevorzugt mehr als 100 °C. Der Trockenvorgang ist beendet, wenn das Pulver Gewichtskonstanz erreicht, d.h. dass sich das Gewicht des Pulvers auch beim weiteren Trocknen nicht mehr verändert.

Das Trockengut kann in einer bevorzugten Verfahrensweise im Anschluss an die Reinigung vermahlen werden. Hierbei können Aggregate wie Stiftmühlen, Sichtermühlen, Hammermühlen, Gegenstrommühlen, Prallmühlen oder Vorrichtungen zur Mahlsichtung zum Einsatz kommen.

Die einzelnen Verfahrensschritte können als diskontinuierlicher (Batch-Prozess) oder kontinuierlicher Prozess durchgeführt werden. Aus technischen Gründen bevorzugt ist eine diskontinuierliche Reaktionsführung. Diese Vorgehensweise hat den Vorteil, dass die Anlagen sehr einfach und wenig störanfällig sind. Es können Standard-Rührwerke verwendet werden. Von der Keimbildung der Partikel bis hin zum fertigen Produkt liegt eine sehr gut definierte enge Verteilung der "Wachstumszeit" vor, eine wichtige Voraussetzung für die Herstellung homogener Produkte.

Für den Batch-Prozess wird Wasser vorgelegt und aufgeheizt. Anschließend werden die Edukte wie u.a. Säure, [SiO_{4/2}]-Ausgangsstoffe und gegebenenfalls weitere Stoffe zudosiert. Parallel oder zeitlich versetzt wird das Modifizierungsmittel zudosiert. Nach erfolgtem Verfahrensschritt i) wird die gesamte Mischung entnommen, gefiltert und gewaschen (ii), gegebenenfalls getrocknet (iii) und/oder gemahlen.

In einer alternativ bevorzugten Ausführungsform erfolgen die Verfahrensschritte in einem kontinuierlichen Prozess.

Der kontinuierliche Prozess umfasst:
(a) die kontinuierliche Einspeisung der Edukte wie beispielsweise Alkalisilicat und Säure in eine Reaktionszone, die von flüssigem Medium durchströmt wird;
(b) die kontinuierliche Einspeisung von Organosiliconat parallel mit den Edukten aus (a) oder bezogen auf die Anlage räumlich versetzt (um bezogen auf die Reaktionsmischung eine zeitlich versetzte Zugabe zu erreichen) in die Reaktionszone;
(c) die kontinuierliche Abführung des gebildeten Produkts;
(d) gegebenenfalls das kontinuierliche Filtern und/oder Waschen;
(e) gegebenenfalls das kontinuierliche Trocknen.

Die einfachste Form eines Reaktors zur Durchführung von kontinuierlichen chemischen Prozessen ist ein Rohr- oder Kesselreaktor. WO 2011/106289 beschreibt beispielsweise die kontinuierliche Kieselsäureherstellung in einem Loop-Reaktor, der auch in diesem Verfahren eingesetzt werden kann.

Insbesondere bevorzugt wird ein Taylor-Couette-Reaktor, wie er beispielsweise in DE 101 51 777 beschrieben ist, eingesetzt. Dieser besteht in der Regel aus zwei koaxialen konzentrisch angeordneten Zylindern, wobei der äußere Hohlzylinder ruht und der innere Vollzylinder rotiert. Als Reaktionsraum dient das Volumen, das durch den Spalt der Zylinder gebildet wird. Wie in DE 101 51 777 detailliert beschrieben, beträgt im stationären Zustand, d.h. Zustand des Reaktors nach dem Anfahren (bei vollständiger Füllung des Reaktors mit den Reaktanden), die Taylorzahl 50-50.000, bevorzugt 500-20.000, besonders bevorzugt 3.000-10.000 und die Reynoldszahl (axial) 0,0724 bis 7,24, bevorzugt 0,1348-2,69, besonders bevorzugt 0,4042-1,35. Die mittlere Verweilzeit im Taylor-Reaktor kann zwischen 5 und 500 Minuten liegen. Bevorzugt wird der Reaktor in senkrechter Position mit einem Durchfluss von unten nach oben oder oben nach unten betrieben.

Der Vorteil des erfindungsgemäßen Verfahrens, bei dem Herstellung und Modifizierung der Fällungskieselsäure in einem Topf erfolgen, besteht darin, dass das Verfahren besonders kostengünstig, schnell und einfach in der Handhabung ist, sowie ressourcenschonend arbeitet. Ein besonderer Vorteil des Verfahrens ist, dass sich Zusammensetzungen herstellen lassen, die eine hohe chemische Reinheit aufweisen. Trotz der Modifizierung der Kieselsäure lassen sich nicht flüchtige wasserlösliche Verunreinigungen wie Natrium, Kalium und Schwefel in Verfahrensschritt (ii) leicht entfernen. Dabei ist es insbesondere vorteilhaft, dass schon unter üblichen Waschbedingungen, d.h. mit geringen Mengen des Waschmediums bzw. in wenigen Waschschritten eine gute Abtrennung von ionischen Verunreinigungen erreicht werden kann, die sich z.B. in einer konstanten geringen Leitfähigkeit des Waschmediums äußert.

Die Erfindung wird im Folgenden anhand von Ausführungsbeispielen naher beschrieben, ohne dadurch beschränkt zu werden.

### Analysemethoden:

### Bestimmung der BET-Oberfläche

Die spezifische Oberfläche wurde bestimmt nach der BET-Methode entsprechend DIN 9277/66131 und 9277/66132 unter Verwendung eines SA™ 3100 Analysators der Firma Beckmann-Coulter.

### Bestimmung des Kohlenstoffgehalts (%C)

Die Elementaranalyse auf Kohlenstoff erfolgte nach DIN ISO 10694 unter Verwendung eines CS-530 Elementaranalysators der Firma Eltra GmbH (D-41469 Neuss).

### Bestimmung der Leitfähigkeit von Wasser

Die Leitfähigkeit wurde mit einem SG3 Seven Go™ conductivity Messgerät der Firma Mettler-Toledo AG, 8603 Schwarzenbach, Schweiz ausgestattet mit einem InLab®738 Sensor bestimmt.

### Bestimmung der Leitfähigkeit einer 5%igen Dispersion in einem Methanol/Wasser-Gemisch

In eine 250 ml PE-Dose mit Schraubdeckel wurden genau 5,00 g Probe eingewogen, mit 10,0 g Methanol gemischt und mit 85,0 g VE-Wasser verdünnt. Das geschlossene Gefäß wurde gut geschüttelt, um eine homogene Mischung zu erhalten und im Anschluss eine Stunde ruhen lassen.

Nach 60 Minuten Wartezeit wurde die Probe erneut aufgeschüttelt und anschließend die Leitfähigkeit bestimmt. Zur Bestimmung kam ein SevenGo -SG3 Messgerät der Firma Mettler-Toledo AG ausgestattet mit InLab®738 Sensor zum Einsatz. Die Messung erfolgte bei 27 °C und wurde durch Temperaturkompensation im Messgerät auf eine Referenztemperatur von 20 °C umgerechnet.

### Bestimmung des Natrium-, Kalium- und Schwefel-Gehalts

Die Proben (ca. 5 g) wurden exakt eingewogen, mit 50-100 ml VE-Wasser aufgeschlämmt und mit 30 ml einer 40%igen HF-Lösung (suprapur) versetzt. Die Mischung wurde auf der Heizplatte bei 150 °C zur Trockene eingedampft, der Rückstand in 1 ml 65%-iger Salpetersäure (suprapur) aufgenommen und mit VE-Wasser auf exakt 5 ml aufgefüllt. Die Elementarbestimmung erfolgte mittels ICP-OES (**I**nductively-**C**oupled **P**lasma **O**ptical **E**mission **S**pectrometry) an einem Perkin-Elmer Optima 7300 V ICP-OES Spektrometer. Das Gerät wurde zuvor jeweils mit vier Kalibrierlösungen geeicht.

Der Elementgehalt in ppm (mg/kg) wurde erhalten durch: Elementgehalt = (MW * 1000) / (EW * 200) mit MW = Messwert in mg/l und EW = Einwaage in g

### Beispiele

Schwefelsäure, HF-Lösung und Salpetersäure wurden in der Qualität p.a., bzw. suprapur von VWR International bezogen. Salzsäure wurde in der Qualität p.a. von Acros Organics bezogen. Das eingesetzte vollentsalzte (deionisierte) Wasser (VE-Wasser) wies eine Leitfähigkeit von ≤ 0,1 µS/cm auf. Soweit nicht anders erwähnt werden die Verfahrensschritte bis zum Filtrations- und Waschschritt unter Rühren durchgeführt.

### Beispiel 1:

In einem 2 1-Glaskolben mit Planschliffdeckel wurden 900 g deionisiertes, vollentsalztes Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 261 g Wasserglas (erhältlich bei Wöllner GmbH als Natriumsilkatlösung 38/40) innerhalb von 60 min mit konstanter Dosierrate dosiert. Durch entsprechende Dosierung von 98%iger Schwefelsäure wurde hierbei der pH-Wert auf 9 gehalten. Im Anschluss wurde innerhalb von 30 min analog 19,5 g einer wässrigen Kalium-Methylsilikonatlösung (erhältlich bei Wacker Chemie AG als SILRES® BS16) zugesetzt. Hierbei und in der anschließenden zweistündigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Druckfilternutsche über einen K100-Filter (beides von Seitz) abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 2:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 261 g Wasserglas (erhältlich bei Wöllner GmbH als Natriumsilkatlösung 38/40) innerhalb von 60 min mit konstanter Dosierrate dosiert. Durch entsprechende Dosierung von 98%iger Schwefelsäure wurde hierbei der pH-Wert auf 9 gehalten. Im Anschluss wurde innerhalb von 30 min analog 39 g einer wässrigen Kalium-Methylsilikonatlösung (erhältlich bei Wacker Chemie AG als SILRES® BS16) zugesetzt. Hierbei und in der anschließenden zweistündigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 3:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 261 g Wasserglas (erhältlich bei Wöllner GmbH als Natriumsilkatlösung 38/40) innerhalb von 61 min mit konstanter Dosierrate dosiert. Durch entsprechende Dosierung von 98%iger Schwefelsäure wurde hierbei der pH-Wert auf 9 gehalten. Im Anschluss wurde innerhalb von 30 min analog 78 g einer wässrigen Kalium-Methylsilikonatlösung (erhältlich bei Wacker Chemie AG als SILRES® BS16) zugesetzt. Hierbei und in der anschließenden 75-minütigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 4:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 261 g Wasserglas (erhältlich bei Wöllner GmbH als Natriumsilkatlösung 38/40) innerhalb von 60 min mit konstanter Dosierrate dosiert. Durch entsprechende Dosierung von 98%iger Schwefelsäure wurde hierbei der pH-Wert auf 9 gehalten. Im Anschluss wurde innerhalb von 95 min analog 245 g einer wässrigen Kalium-Methylsilikonatlösung (erhältlich bei Wacker Chemie AG als SILRES® BS16) zugesetzt. Hierbei und in der anschließenden 90-minütigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 5:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 180 g Wasserglas (erhältlich bei Wöllner GmbH als Natriumsilkatlösung 38/40) innerhalb von 60 min mit konstanter Dosierrate dosiert. Durch entsprechende Dosierung von 98%iger Schwefelsäure wurde hierbei der pH-Wert auf 9 gehalten. Im Anschluss wurde innerhalb von 30 min analog 13,5 g einer wässrigen Kalium-Methylsilikonatlösung (erhältlich bei Wacker Chemie AG als SILRES® BS16) zugesetzt. Hierbei und in der anschließenden zweistündigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 6:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 130 g Wasserglas (erhältlich bei Wöllner GmbH als Natriumsilkatlösung 38/40) innerhalb von 30 min mit konstanter Dosierrate dosiert. Durch entsprechende Dosierung von 98%iger Schwefelsäure wurde hierbei der pH-Wert auf 9 gehalten. Im Anschluss wurde innerhalb von 15 min analog 39 g einer wässrigen Kalium-Methylsilikonatlösung (erhältlich bei Wacker Chemie AG als SILRES® BS16) zugesetzt. Hierbei und in der anschließenden 105-minütigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 7:

In einem 2 1-Glaskolben mit Planschliffdeckel wurden 900 g VE-Wasser im Ölbad auf 80 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 261 g Wasserglas (erhältlich bei Wöllner GmbH als Natriumsilkatlösung 38/40) innerhalb von 60 min mit konstanter Dosierrate dosiert. Durch entsprechende Dosierung von 98%iger Schwefelsäure wurde hierbei der pH-Wert auf 9 gehalten. Im Anschluss wurde innerhalb von 30 min analog 78 g einer wässrigen Kalium-Methylsilikonatlösung (erhältlich bei Wacker Chemie AG als SILRES® BS16) zugesetzt. Hierbei und in der anschließenden 75-minütigen Nachrührphase wurde die Temperatur der Reaktionsmischung weiterhin auf 80 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 80 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 8:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 261 g Wasserglas (erhältlich bei Wöllner GmbH als Natriumsilkatlösung 38/40) innerhalb von 61 min mit konstanter Dosierrate dosiert. Durch entsprechende Dosierung von 98%iger Schwefelsäure wurde hierbei der pH-Wert auf 8 gehalten. Im Anschluss wurde innerhalb von 30 min analog 78 g einer wässrigen Kalium-Methylsilikonatlösung (erhältlich bei Wacker Chemie AG als SILRES® BS16) zugesetzt. Hierbei und in der anschließenden 60-minütigen Nachrührphase wurde die Temperatur der Reaktionsmischung weiterhin auf 90 °C eingestellt und der pH-Wert durch Zugabe von 98%iger Schwefelsäure bei 8 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 9:

In einem 21-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 261 g Wasserglas (erhältlich bei Wöllner GmbH als Natriumsilkatlösung 38/40) innerhalb von 40 min mit konstanter Dosierrate dosiert. Durch entsprechende Dosierung von 98%iger Schwefelsäure wurde hierbei der pH-Wert auf 9 gehalten. Im Anschluss wurde innerhalb von 20 min analog 78 g einer wässrigen Kalium-Methylsilikonatlösung (erhältlich bei Wacker Chemie AG als SILRES® BS16) zugesetzt. Hierbei und in der anschließenden 90-minütigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 10:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 261 g Wasserglas (erhältlich bei Wöllner GmbH als Natriumsilkatlösung 38/40) innerhalb von 61 min mit konstanter Dosierrate dosiert. Durch entsprechende Dosierung von 98%iger Schwefelsäure wurde hierbei der pH-Wert auf 9 gehalten. Im Anschluss wurde die Mischung zum Rückfluss erhitzt und innerhalb von 30 min analog 39 g einer wässrigen Kalium-Methylsilikonatlösung (erhältlich bei Wacker Chemie AG als SILRES® BS16) zugesetzt. Hierbei und in der anschließenden 60-minütigen Nachrührphase wurde die Temperatur der Reaktionsmischung weiterhin auf 90 °C eingestellt und der pH-Wert durch Zugabe von 98%iger Schwefelsäure bei 9 konstant gehalten und weiterhin unter Rückfluss gerührt. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 11:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend gleichzeitig 261 g Wasserglas (erhältlich bei Wöllner GmbH als Natriumsilkatlösung 38/40) und 78 g einer wässrigen Kalium-Methylsilikonatlösung (erhältlich bei Wacker Chemie AG als SILRES® BS16) innerhalb von 61 min mit konstanter Dosierrate dosiert. Durch entsprechende Dosierung von 98%iger Schwefelsäure wurde hierbei der pH-Wert auf 9 gehalten. In der anschließenden 90-minütigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 12:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend gleichzeitig 261 g Wasserglas (erhältlich bei Wöllner GmbH als Natriumsilkatlösung 38/40) und 10 g einer wässrigen Kalium-Methylsilikonatlösung (erhältlich bei Wacker Chemie AG als SILRES® BS16) innerhalb von 61 min mit konstanter Dosierrate dosiert. Durch entsprechende Dosierung von 98%iger Schwefelsäure wurde hierbei der pH-Wert auf 9 gehalten. Im Anschluss wurde innerhalb von 30 min analog 68 g einer wässrigen Kalium-Methylsilikonatlösung (erhältlich bei Wacker Chemie AG als SILRES® BS16) zugesetzt. Hierbei und in der anschließenden 60-minütigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 13:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 60 g Wasserglas (erhältlich bei Wöllner GmbH als Natriumsilkatlösung 38/40) innerhalb von 12 min mit konstanter Dosierrate dosiert. Durch entsprechende Dosierung von 98%iger Schwefelsäure wurde hierbei der pH-Wert auf 9 gehalten. Anschließend wurden unter weiterem Rühren gleichzeitig 201 g Wasserglas (erhältlich bei Wöllner GmbH als Natriumsilkatlösung 38/40) und 53 g einer wässrigen Kalium-Methylsilikonatlösung (erhältlich bei Wacker Chemie AG als SILRES® BS16) innerhalb von 42 min mit konstanter Dosierrate dosiert, wobei die Reaktionsmischung weiterhin auf 90 °C temperiert wurde. Durch entsprechende Dosierung von 98%iger Schwefelsäure wurde auch hierbei der pH-Wert auf 9 gehalten. Im Anschluss wurde innerhalb von 7 min analog 9 g einer wässrigen Kalium-Methylsilikonatlösung (erhältlich bei Wacker Chemie AG als SILRES® BS16) zugesetzt. Hierbei und in der anschließenden 60-minütigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 120 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 14:

In einem 2 l-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 60 g Wasserglas (erhältlich bei Wöllner GmbH als Natriumsilkatlösung 38/40) innerhalb von 13 min mit konstanter Dosierrate dosiert. Durch entsprechende Dosierung von 98%iger Schwefelsäure wurde hierbei der pH-Wert auf 9 gehalten. Anschließend wurde unter weiterem Rühren während eines Zeitraums von 90 min die Dosierung von Wasserglas kontinuierlich verlangsamt, so dass am Ende insgesamt 200 g Wasserglas dosiert wurden (erhältlich bei Wöllner GmbH als Natriumsilkatlösung 38/40). Die Dosiergeschwindigkeit betrug zu Beginn der 90 min 2,2 g/min und am Ende 0,0 g/min. Parallel wurden in der gleichen Zeit 53 g einer wässrigen Kalium-Methylsilikonatlösung (erhältlich bei Wacker Chemie AG als SILRES® BS16) mit zunehmender Geschwindigkeit dosiert. Das heißt die Dosierrate betrug zu Beginn der 90 min 0,0 g/min und am Ende 1,2 g/min. Die Reaktionsmischung wurde hierbei weiterhin auf 90 °C temperiert. Durch entsprechende Dosierung von 98%iger Schwefelsäure wurde auch hierbei der pH-Wert auf 9 gehalten. Im Anschluss wurde innerhalb von 7 min analog 9 g einer wässrigen Kalium-Methylsilikonatlösung (erhältlich bei Wacker Chemie AG als SILRES® BS16) zugesetzt. Hierbei und in der anschließenden 60-minütigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 120 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 15:

In einem 2 1-Glaskolben mit Planschliffdeckel wurden 900 g VE-Wasser im Ölbad auf 90 °C erhitzt. Unter kräftigem Rühren (900 min⁻¹) mit einer PTFE-Bola-Ankerrührwelle der Firma Bohlender GmbH (Modell C 384-08) wurden bei dieser Temperatur anschließend 261 g Wasserglas (erhältlich bei Wöllner GmbH als Natriumsilkatlösung 38/40) innerhalb von 61 min mit konstanter Dosierrate dosiert. Durch entsprechende Dosierung von 98%iger Schwefelsäure wurde hierbei der pH-Wert auf 9 gehalten. Im Anschluss wurde innerhalb von 32 min analog 280 g einer wässrigen Natrium-Methylsilikonatlösung (erhältlich bei Dow Corning Inc. als XIAMETER® OFS-0772) zugesetzt. Hierbei und in der anschließenden 165-minütigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis ein konstanter Leitfähigkeitswert des Waschwassers erreicht wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

### Beispiel 16:

In einem 40 1-Universal-Rührwerk (Stahl/Emaille) ausgestattet mit einem Propeller Flügelrührer wurden 18 kg VE-Wasser auf 90 °C erhitzt. Unter Rühren (250 min⁻¹) wurden bei dieser Temperatur 5,23 kg Wasserglas (erhältlich bei Wöllner GmbH als Natriumsilkatlösung 38/40) innerhalb von 60 min mit konstanter Dosierrate dosiert. Zeitgleich wurden parallel 1,01 kg 98%ige Schwefelsäure dosiert, wodurch der pH-Wert weitgehend konstant gehalten wurde (pH = 9,0-9,3). Die Mischung wurde weitere 15 min bei 90 °C gerührt und dann unter Rühren bei 90 °C innerhalb von 55 min 1,56 kg einer wässrigen Kalium-Methylsilikonatlösung (erhältlich bei Wacker Chemie AG als SILRES® BS16) und 0,59 kg 98%ige Schwefelsäure dosiert (pH = 8,9-9,6). Die Mischung wurde 1 h bei 90 °C und pH = 9 nachgerührt und dann durch Zugabe von 98%iger Schwefelsäure unter Rühren auf pH = 3,5 angesäuert. Nach Abkühlen auf 50 °C wurde über eine Kammerfilterpresse unter Verwendung von K100-Filterplatten abfiltriert, pH-neutral gewaschen und mit Stickstoff trockengeblasen. Der Filterkuchen wurde auf Blechen im Trockenschrank bei 150 °C zur Gewichtskonstanz getrocknet und nach Abkühlen auf Raumtemperatur an einer ZPS50-Sichtermühle der Firma Hosokawa-Alpine vermahlen (Mühle: 20.000 min⁻¹; Sichter: 16.000 min⁻¹). Anschließend wurde der Feststoff wie in den Analysemethoden beschrieben analysiert. Die Ergebnisse sind in Tab. 1 aufgeführt.

### Beispiel 17:

In einem 40 1-Universal-Rührwerk (Stahl/Emaille) ausgestattet mit einem Propeller Flügelrührer wurden 18 kg VE-Wasser auf 75 °C erhitzt. Unter Rühren (250 min⁻¹) wurden bei dieser Temperatur 5,23 kg Wasserglas (erhältlich bei Wöllner GmbH als Natriumsilkatlösung 38/40) innerhalb von 60 min mit konstanter Dosierrate dosiert. Zeitgleich wurden parallel 1,01 kg 98%ige Schwefelsäure dosiert, wodurch der pH-Wert weitgehend konstant gehalten wurde (pH = 9,1-9,3). Die Mischung wurde weitere 10 min bei 75°C gerührt und dann unter Rühren innerhalb von 50 min 1,52 kg einer wässrigen Kalium-Methylsilikonatlösung (erhältlich bei Wacker Chemie AG als SILRES® BS16) und 0,59 kg 98%ige Schwefelsäure dosiert (pH = 9,1-9,5). Die Mischung wurde 1 h bei 75 °C und pH = 9 nachgerührt und dann durch Zugabe von 98%iger Schwefelsäure unter Rühren zur weiterhin auf 75 °C temperierten Reaktionsmischung auf pH = 3,2 angesäuert. Nach Abkühlen auf 50 °C wurde über eine Kammerfilterpresse unter Verwendung von K100-Filterplatten abfiltriert, pH-neutral gewaschen und mit Stickstoff trockengeblasen. Der Filterkuchen wurde auf Blechen im Trockenschrank bei 150 °C zur Gewichtskonstanz getrocknet und nach Abkühlen auf Raumtemperatur an einer ZPS50-Sichtermühle der Firma Hosokawa-Alpine vermahlen (Mühle: 20.000 min⁻¹; Sichter: 16.000 min⁻¹). Anschließend wurde der Feststoff wie in den Analysemethoden beschrieben analysiert. Die Ergebnisse sind in Tab. 1 aufgeführt.

### Beispiel 18:

In einem 40 1-Universal-Rührwerk (Stahl/Emaille) ausgestattet mit einem Propeller Flügelrührer wurden 18 kg VE-Wasser auf 90 °C erhitzt. Unter Rühren (250 min⁻¹) wurden bei dieser Temperatur 5,23 kg Wasserglas (erhältlich bei Wöllner GmbH als Natriumsilkatlösung 38/40) innerhalb von 120 min mit konstanter Dosierrate dosiert. Zeitgleich wurden parallel 0,99 kg 98%ige Schwefelsäure dosiert, wodurch der pH-Wert weitgehend konstant gehalten wurde (pH = 9,0-9,2). Die Mischung wurde weitere 10 min bei 90 °C gerührt und dann unter Rühren innerhalb von 60 min 1,52 kg einer wässrigen Kalium-Methylsilikonatlösung (erhältlich bei Wacker Chemie AG als SILRES® BS16) und 0,59 kg 98%ige Schwefelsäure dosiert (pH = 9,0-9,5), wobei die Reaktionsmischung weiterhin auf 90 °C temperiert wurde. Die Mischung wurde 1 h bei 90 °C und pH = 9 nachgerührt und dann durch Zugabe von 98%iger Schwefelsäure bei 90 °C unter Rühren auf pH = 3,0 angesäuert. Nach Abkühlen auf 50 °C wurde über eine Kammerfilterpresse unter Verwendung von K100-Filterplatten abfiltriert, pH-neutral gewaschen und mit Stickstoff trockengeblasen. Der Filterkuchen wurde auf Blechen im Trockenschrank bei 150 °C zur Gewichtskonstanz getrocknet und nach Abkühlen auf Raumtemperatur an einer ZPS50-Sichtermühle der Firma Hosokawa-Alpine vermahlen (Mühle: 20.000 min⁻¹; Sichter: 16.000 min⁻¹). Anschließend wurde der Feststoff wie in den Analysemethoden beschrieben analysiert. Die Ergebnisse sind in Tab. 1 aufgeführt.

### Beispiel 19:

In einem 6 l-Doppelmantelreaktor wurden 4,32 kg VE-Wasser auf 90 °C erhitzt. Der Reaktor war mit einer Umförderleitung ausgestattet, wobei kontinuierlich ein Teil der Reaktionsmischung durch ein Ultraturrax T25-Dispergieraggregat (20.000 min⁻¹) der Firma IKA®-Werke GmbH & CO. KG geleitet wurde. Unter Rühren mit einem Turbinenrührer (400 min⁻¹) wurden bei 90 °C anschließend 1,25 kg Wasserglas (erhältlich bei Wöllner GmbH als Natriumsilkatlösung 38/40) innerhalb von 61 min mit konstanter Dosierrate dosiert. Durch entsprechende Dosierung von 62%iger Schwefelsäure wurde hierbei der pH-Wert auf 9 gehalten. Im Anschluss wurde innerhalb von 41 min analog 0,37 kg einer wässrigen Kalium-Methylsilikonatlösung (erhältlich bei Wacker Chemie AG als SILRES® BS16) zugesetzt. Hierbei und in der anschließenden 60-minütigen Nachrührphase wurde die Temperatur der Reaktionsmischung weiterhin auf 90 °C eingestellt und der pH-Wert durch Zugabe von 98%iger Schwefelsäure bei 9 konstant gehalten. Durch Zugabe von 98%iger Schwefelsäure wurde unter Rühren der weiterhin auf 90 °C temperierten Reaktionsmischung der pH-Wert auf 3,5 abgesenkt. Nach dem Abkühlen der Reaktionsmischung unter Rühren auf Raumtemperatur wurde der Feststoff in einer Seitz-Druckfilternutsche über einen K100-Filter abgetrennt und mit VE-Wasser nachgewaschen bis die Leitfähigkeitswert des Waschwassers auf 20 µS/cm abgesenkt wurde. Der erhaltene Feststoff wurde im Trockenschrank bei 130 °C zur Gewichtskonstanz getrocknet. Nach Abkühlen auf Raumtemperatur wurde der Feststoff wie in den Analysemethoden beschrieben analysiert. Die Ergebnisse sind in Tab. 1 aufgeführt.

**Tabelle 1: Analytische Daten der aus den in den Beispielen beschriebenen Verfahren hergestellten Zusammensetzungen**

| **Beispiel** | **C-gehalt** [%] | **Spezifische Oberfläche des Metalloxids [m²/g]** | **Na-Gehalt [ppm]** | **K-Gehalt [ppm]** | **S-Gehalt [ppm]** | **Leitfähigkeit [µS/cm]** |
|---|---|---|---|---|---|---|
| 1 | 1,2 | 154 | 1500 | 910 | <20 | 15 |
| 2 | 2,2 | 139 | n.b. | n.b. | n.b. | n.b. |
| 3 | 3,7 | 126 | 1100 | 1900 | <20 | 18 |
| 4 | 8, 4 | 99 | 1400 | 3100 | <20 | 19 |
| 5 | 1,2 | 190 | n.b. | n.b. | n.b. | n.b. |
| 6 | 3, 6 | 203 | n.b. | n.b. | n.b. | 10 |
| 7 | 3, 8 | 140 | 1200 | 550 | <20 | 13 |
| 8 | 4 | 107 | 1400 | 2500 | <20 | 18 |
| 9 | 3,9 | 151 | 750 | 1400 | <20 | n.b. |
| 10 | 2,2 | 126 | n.b. | n.b. | n.b. | n.b. |
| 11 | 4, 1 | 121 | 360 | 890 | <20 | 10 |
| 12 | 3,7 | 123 | n.b. | n.b. | n.b. | n.b. |
| 13 | 2,4 | 164 | n.b. | n.b. | n.b. | n.b. |
| 14 | 2,5 | 156 | n.b. | n.b. | n.b. | n.b. |
| 15 | 7, 1 | 89 | 1200 | 4 | 23 | 14 |
| 16 | 3,7 | 107 | n.b. | n.b. | n.b. | n.b. |
| 17 | 3,9 | 173 | n.b. | n.b. | n.b. | n.b. |
| 18 | 3,9 | 92 | n.b. | n.b. | n.b. | n.b. |
| 19 | 4 | 114 | 790 | 1500 | 20 | 13 |
| V* | n.b. | n.b. | 5500 | 69 | 2500 | 680 |

| | | | | | | |
|---|---|---|---|---|---|---|
| n.b., nicht bestimmt V*, Vergleich, Bestimmung von Sipernat D17 (hydrophobe Fällungskieselsäure, kommerziell erhältlich bei Evonik) | | | | | | |

## Patentansprüche

1. Verfahren zur Herstellung einer modifizierten Fällungskieselsäure, wobei
i) die Modifizierung in der Reaktionsmischung, die
1. Säure und
2. eine Verbindung ausgewählt aus einer Fällungskieselsäure und/oder [SiO_{4/2}] -Ausgangsstoffen und
3. ein Organosiliconat als Modifizierungsmittel umfasst, erfolgt,
wobei die Modifizierungsreaktion während oder unmittelbar nach der Herstellreaktion der Fällungskieselsäure erfolgt,
ii) die Reaktionsmischung anschließend gefiltert und gewaschen wird und
iii) die Reaktionsmischung gegebenenfalls in einem weiteren Verfahrensschritt getrocknet wird,
wobei als [SiO_{4/2}]-Ausgangsstoffe Alkoxysilane oder Alkalisilicate eingesetzt werden.

2. Verfahren nach Anspruch 1, **dadurch gekennzeichnet, dass** das Modifizierungsmittel mit konstanter Dosiergeschwindigkeit zugegeben wird.

3. Verfahren nach einem der Ansprüche 1 oder 2, **dadurch gekennzeichnet, dass** die Temperatur während des Verfahrensschritts i konstant gehalten wird.

4. Verfahren nach einem der Ansprüche 1 bis 3, **dadurch gekennzeichnet, dass** der pH-Wert während des Verfahrensschritts i konstant gehalten wird.

5. Verfahren nach einem der Ansprüche 1 bis 4, **dadurch gekennzeichnet, dass** das Modifizierungsmittel parallel mit der Säure und den [SiO_{4/2}]-Ausgangsstoffen zur Reaktionsmischung gegeben wird.

6. Verfahren nach einem der Ansprüche 1 bis 4, **dadurch gekennzeichnet, dass** das Modifizierungsmittel zeitlich versetzt zur Reaktionsmischung gegeben wird.

7. Verfahren nach einem der Ansprüche 1 bis 6, **dadurch gekennzeichnet, dass** es sich beim Organosiliconat um ein Methylsiliconat handelt.

8. Verfahren nach einem der Ansprüche 1 bis 7, **dadurch gekennzeichnet, dass** die Verfahrensschritte in einem diskontinuierlichen Prozess erfolgen.

9. Verfahren nach einem der Ansprüche 1 bis 7, **dadurch gekennzeichnet, dass** die Verfahrensschritte in einem kontinuierlichen Prozess erfolgen.

## Claims

1. Process for producing a modified precipitated silica, wherein
i) the modification is effected in the reaction mixture comprising
1. acid and
2. a compound selected from a precipitated silica and/or [SiO_{4/2}] starting materials and
3. an organosiliconate as modifying agent,
wherein the modification reaction is effected during or immediately after the reaction for production of the precipitated silica,
ii) the reaction mixture is then filtered and washed and
iii) the reaction mixture is optionally dried in a further process step,
wherein the [SiO_{4/2}] starting materials used are alkoxysilanes or alkali metal silicates.

2. Process according to Claim 1, **characterized in that** the modifying agent is added at a constant dosage rate.

3. Process according to either of Claims 1 and 2, **characterized in that** the temperature is kept constant during process step i.

4. Process according to any of Claims 1 to 3, **characterized in that** the pH is kept constant during process step i.

5. Process according to any of Claims 1 to 4, **characterized in that** the modifying agent is added to the reaction mixture in parallel with the acid and the [SiO_{4/2}] starting materials.

6. Process according to any of Claims 1 to 4, **characterized in that** the modifying agent is added to the reaction mixture at a different time.

7. Process according to any of Claims 1 to 6, **characterized in that** the organosiliconate is a methyl siliconate.

8. Process according to any of Claims 1 to 7, **characterized in that** the process steps are effected in a batchwise operation.

9. Process according to any of Claims 1 to 7, **characterized in that** the process steps are effected in a continuous operation.

## Revendications

1. Procédé pour la préparation d'une silice précipitée modifiée,
i) la modification étant réalisée dans le mélange réactionnel, qui comprend
1) un acide et
2) un composé choisi parmi une silice précipitée et/ou des matières de départ de [SiO_{4/2}] et
3) un organosiliconate en tant qu'agent de modification,
la réaction de modification ayant lieu pendant ou directement après la réaction de préparation de la silice précipitée,
ii) le mélange réactionnel étant ensuite filtré et lavé et
iii) le mélange réactionnel étant éventuellement séché dans une étape de procédé supplémentaire,
des alcoxysilanes ou des silicates d'alcali étant utilisés en tant que matières de départ de [SiO_{4/2}].

2. Procédé selon la revendication 1, **caractérisé en ce que** l'agent de modification est ajouté avec une vitesse d'ajout constante.

3. Procédé selon l'une quelconque des revendications 1 et 2, **caractérisé en ce que** la température est maintenue constante pendant l'étape de procédé i.

4. Procédé selon l'une quelconque des revendications 1 à 3, **caractérisé en ce que** la valeur de pH est maintenue constante pendant l'étape de procédé i.

5. Procédé selon l'une quelconque des revendications 1 à 4, **caractérisé en ce que** l'agent de modification est ajouté au mélange réactionnel en parallèle avec l'acide et les matières de départ de [SiO_{4/2}].

6. Procédé selon l'une quelconque des revendications 1 à 4, **caractérisé en ce que** l'agent de modification est ajouté au mélange réactionnel avec un décalage dans le temps.

7. Procédé selon l'une quelconque des revendications 1 à 6, **caractérisé en ce que** l'organosiliconate est un méthyle-siliconate.

8. Procédé selon l'une quelconque des revendications 1 à 7, **caractérisé en ce que** les étapes de procédé sont réalisées dans un processus discontinu.

9. Procédé selon l'une quelconque des revendications 1 à 7, **caractérisé en ce que** les étapes de procédé sont réalisées dans un processus continu.
